(19) **Europäisches Patentamt / European Patent Office / Office européen des brevets**

(11) **EP 1 937 769 B1**

(12) **EUROPEAN PATENT SPECIFICATION**

(45) Date of publication and mention
of the grant of the patent:
**25.08.2010 Bulletin 2010/34**

(21) Application number: **06806294.2**

(22) Date of filing: **16.10.2006**

(51) Int Cl.:
*C08L 23/04* (2006.01)     *C08L 23/08* (2006.01)
*C08F 297/08* (2006.01)     *C08F 10/02* (2006.01)

(86) International application number:
**PCT/EP2006/009955**

(87) International publication number:
**WO 2007/045415 (26.04.2007 Gazette 2007/17)**

(54) **COMPOSITION**

ZUSAMMENSETZUNG

COMPOSITION

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.10.2005 EP 05022981**

(43) Date of publication of application:
**02.07.2008 Bulletin 2008/27**

(73) Proprietor: **Borealis Technology Oy
06101 Porvoo (FI)**

(72) Inventors:
• **PALMLOF, Magnus
S-426 71 Vastra Frolunda (SE)**
• **FOLLESTAD, Arild
N-3960 Stathelle (NO)**

• **NORD-VARHAUG, Katrin
N-3942 Porsgrunn (NO)**
• **EGGEN, Svein, Staal
N-3947 Langangen (NO)**

(74) Representative: **Campbell, Neil Boyd
Dehns
St Bride's House
10 Salisbury Square
London
EC4Y 8JD (GB)**

(56) References cited:
**EP-A- 1 319 685      EP-A1- 1 574 549
US-A1- 2002 156 214   US-A1- 2003 187 083
US-B1- 6 489 427**

**Description**

This invention relates to a polyethylene composition and to pipes made therefrom which exhibit desirable mechanical properties, such as high CTL (constant tensile load), as well as desired processability, e.g. as indicated by their melt flow properties. In one embodiment, the invention concerns a composition comprising a unimodal single site polyethylene component mixed with a Ziegler-Natta multimodal polyethylene component for the manufacture of pipes.

Polyethylene is widely used in pipe applications due to its favourable physical and chemical properties. In order to be suitable for use in this field, the polyethylene needs to possess certain mechanical and processing properties. It will be obvious therefore that in pipe applications, good mechanical strength is needed (e.g. good impact resistance) and the polyethylene needs to be suitable for use with the material which the pipe is intended to carry. Good processability is also required to meet the high production rates needed for industrial applications.

The polymer chemist is constantly striving to improve the properties of the polymers he manufactures. There is the need therefore for polymers to be readily processable, e.g. extrudable in order that they can be manipulated easily. The polymers need good mechanical properties, e.g. high stiffness, impact strength, and should also possess low permeability to gases and water etc. Appearance is also critical as the end consumer is very sensitive to aesthetics. Unfortunately, it is known that improvements in certain properties tends to detrimentally affect others. The chemist is thus looking for an ideal balance of properties to maximise polymer performance.

The present inventors set out to try to improve the mechanical properties of polyethylene to provide polymers with, inter alia, excellent impact strength and CTL without affecting processability. The present inventors have found a particular polymer composition which possesses excellent mechanical properties, exemplified by its high impact strength at low temperature. The claimed composition also allows the formation of pipes which possess excellent stress cracking resistance measured as CTL and high melt strength. All this can be achieved at low viscosity when using high shear rates meaning processability is maintained.

Whilst high CTL in pipe applications is traditionally associated with a high molecular weight, high comonomer content component this has ramifications on the processability of the polymer. The present inventors have found a composition with a specific multimodal molecular weight distribution which possess excellent CTL and impact strength whilst still being readily processable.

An important feature for pipe applications, especially pipe with wall thickness greater than 0.5 cm, more so with wall thickness greater than 1 cm, and most important for wall thickness greater than 2 cm, is their ability to withstand sagging as the pipe, in its initial molten stage, comes out of the extruder die. If the extrudate sags, the pipe cross section will become oval. The sagging process is a very slow flow of polymer melt, driven by the force of gravity acting on the molten pipe wall. The extent to which such very slow flow occurs, in addition to the effects of melt temperature, geometry and time, depends on the polymer's low shear viscosity at a reference temperature. Thus, the sagging properties of different polyethylenes can qualitatively be compared from their rheodynamic analysis (RDA) curves at 190°C. The material with the highest viscosity at very low shear rate is best able to withstand sagging, and is the best material in this respect.

This can be measured by a shear thinning index (SHI), the ratio of the viscosity at a low shear stress, divided by the viscosity a higher shear stress. The material with the higher shear thinning index can then both have the advantageous high viscosity at low shear conditions, as well as having good low viscosity at the high shear rates within the extruder and within the extruder die, which gives low amperage, good output and low pressure buildup in the extruder. The same property can be seen by the Melt Flow Rate Ratio FRR5/2. Since melt flow rate (MFR) is essentially a measure of inverse viscosity at a given shear stress, FRR5/2 is essentially the ratio between the viscosities at a lower and a higher shear stress. A high value of FRR5/2 corresponds to a high value of shear sensitivity and is thus advantageous. Both SHI and MFR are indicators of molecular weight distribution.

It has been surprisingly found that small amounts of narrow Mw/Mn single site polyethylene added to the bimodal Ziegler hardly reduces the shear thinning index thus allowing the formation of particularly advantageous polymer compositions.

Thus, viewed from one aspect, the invention provides a polyethylene composition comprising at least a first composition and a second composition in amounts of:

at least 70 wt% of the first composition which comprises at least:

(A) up to 60 wt%, preferably 20 to 60 wt%, lower molecular weight (LMW) polyethylene homo or copolymer obtained by Ziegler-Natta catalysis having a density of at least 940 kg/m³; and

(B) up to 60 wt%, preferably 20 to 60% higher molecular weight (HMW) polyethylene homo or copolymer obtained by Ziegler-Natta catalysis and having lower density than component (A); and
up to 30 wt% of the second composition which comprises at least:

(C) a polyethylene homo or copolymer obtained by single site catalysis (SSC) and having a density of up to 980 kg/m$^3$;

wherein said polyethylene composition has a density at least of 925 kg/m$^3$.

In a first embodiment of the invention the polyethylene composition as hereinbefore described is further characterised by having a CTL of at least 300 hours.

In a second embodiment of the invention the polyethylene composition as hereinbefore described is further characterised by having a first composition which has a density of 925 to 975 kg/m$^3$ and an MFR$_5$ of 0.1 to 5 g/10 min.

In a third embodiment of the invention the polyethylene composition as hereinbefore described is further characterised by having a first composition which has a density of 925 to 975 kg/m$^3$, an MFR$_5$ of 0.1 to 5 g/10 min and an FRR$_{5/2}$ of 4.5 to 7.0.

In a fourth embodiment of the invention the polyethylene composition as hereinbefore described is further characterised by having an MFR$_5$ of less than 5 g/10 min.

Any of the additional features of the first to fourth embodiments may also be combined with the features of any other embodiment to form further preferred combinations. Thus, for example, in a further embodiment, the invention provides a polyethylene composition as hereinbefore described having a CTL of at least 300 hours and an MFR$_5$ of less than 5 g/10 min (i.e. a combination of the 1st and 4th embodiments). All the preferred features which follow are also applicable to any embodiment of the invention.

The present invention claims a multimodal composition which provides an advantageous balance between the mechanical and processing properties.

The second composition which forms part of the overall polyethylene composition comprises a component (C). This may form the only polymer component in the second composition or the second composition may contain other polymer components. Preferably (C) is the only component.

Component (C) is a polyethylene homo or copolymer, preferably copolymer, produced using single site catalysis, e.g. metallocene catalysis. Any single site, e.g. metallocene catalyst may be used to form component (C). Metallocene catalysts are well known in the art and form polymers that are typically readily distinguishable from polymers formed by Ziegler-Natta catalysts (e.g. they have very different composition breadth distribution indexes (CBDI), different molecular weight distributions etc).

Component (C) can be unimodal or multimodal, e.g. bimodal, with respect to weight average molecular weight distribution. Unless otherwise stated, the terms unimodal or bimodal as used generally herein refers to modality with respect to weight average molecular weight. In a preferable embodiment component (C) is preferably unimodal. By unimodal is meant that its molecular weight profile (measured by GPC) contains a single peak.

Component (C) should preferably form 2 to 25% by weight, e.g. 3 to 20% wt, preferably 10 to 20 % by weight. Alternatively for some embodiments 4 to 15 % by weight, more preferably 5 to 15 wt%, e.g. 6 to 12 wt%, especially around 10 wt% of the polyethylene composition are desired.

Component (C) may have a density of up to 960 kg/m$^3$, such as up to 945 kg/m$^3$, preferably in the range of from 880 to 940 kg/m$^3$, e.g. 900 to 940 kg/m$^3$, preferably 915 to 934 kg/m$^3$, e.g. 918 to 934 kg/m$^3$, especially 920 to 930 kg/m$^3$ (ISO 1183). Component (C) is preferably a linear low density polyethylene polymer (LLDPE). Whilst component (C) may contain long chain branching, most preferably it is completely linear, i.e. it has no measurable amount of long chain branching. Long chain branching can be detected using C$^{13}$ NMR.

For pipe applications, preferred densities may be in the range 922 to 940 kg/m$^3$.

Component (C) is preferably a copolymer formed from ethylene along with at least one C$_{3-12}$ alpha-olefin comonomer, which can be linear or branched, such as propene, butene, pentene, hexene, heptene, octene, nonene and decene, preferably but-1-ene, hex-1-ene or oct-1-ene. Preferably, component (C) is an ethylene hexene copolymer or ethylene butene copolymer. The amount of comonomer incorporated is preferably 0.3 to 25 wt% relative to ethylene. Thus, component (C) may be a soft polyethylene copolymer having a comonomer content of 10 to 20 wt%. Preferably however, component (C) is an LLDPE whose comonomer content might be 1 to 10 % wt, e.g. 0.3 to 3 mol% relative to ethylene, such as 1 to 2 mol%. As well known, component (C) may also be multimodal, including bimodal, with respect to the comonomer distribution.

The MFR$_{21}$ (melt flow rate ISO 1133 at 190°C under a load of 21.6 kg) of Component (C) should preferably be greater than 0.01 g/10 min.

The MFR$_2$ (melt flow rate ISO 1133 at 190°C under a load of 2.16 kg) of Component (C) should preferably be in the range 0.5 to 40 g/10 min, preferably 0.8 to 20 g/10 min, e.g. 0.9 to 15 g/10min. Highly preferred ranges include 1.0 to 6.0 g/10 min, especially 1.4 to 4 g/10 min or 0.9 to 2.0 g/10min.

FRR$_{5/2}$ ratio (MFR$_5$/MFR$_2$) may be in the range 2.5 to 3.0, e.g. 2.53 to 2.8, especially 2.56 to 2.7.

Typically component (C) has a different Mw/Mn than the first component. The Mw of component (C) may be less than 2,000,000, preferably less than 1,000,000, more preferably less than 250,000, especially less than 150,000, e.g. between 100,000 - 150,000, such as 110,000 - 140,000. The Mw/Mn (MWD) value should preferably be 2.0 to 5, e.g. 2.5 to 4, more preferably 2.1 to 4, preferably 2.2 to 3.0 or 3.0 to 3.5 (GPC).

Suitable polymers as Component (C) can be any known polymer, e.g. a commercially available polymer, or the polymer can be produced according or analogously to literature known in the field of polymerisation.

Component (C) is produced using a single site catalyst, e.g. a catalyst comprising a metal coordinated by one or more η-bonding ligands. Such η-bonded metals are typically Zr, Hf or Ti, especially Zr or Hf. The η-bonding ligand is typically an $η^5$-cyclic ligand, i.e. a homo or heterocyclic cyclopentadienyl group optionally with fused or pendant substituents. Such single site, preferably metallocene procatalysts, have been widely described in the scientific and patent literature for about twenty years.

The metallocene procatalyst may have a formula II:

$$(Cp)_m R_n M X_q \qquad (II)$$

wherein:

each Cp independently is an unsubstituted or substituted and/or fused homo- or heterocyclopentadienyl ligand, e.g. substituted or unsubstituted cyclopentadienyl, substituted or unsubstituted indenyl or substituted or unsubstituted fluorenyl ligand;

the optional one or more substituent(s) being independently selected preferably from halogen, hydrocarbyl (e.g. C1-C20-alkyl, C2-C20-alkenyl, C2-C20-alkynyl, C3-C12-cycloalkyl, C6-C20-aryl or C7-C20-arylalkyl), C3-C12-cycloalkyl which contains 1, 2, 3 or 4 heteroatom(s) in the ring moiety, C6-C20-heteroaryl, C1-C20-haloalkyl, $-SiR''_3$, $-OSiR''_3$, $-SR''$, $-PR''_2$ or $-NR''_2$,

each R'' is independently a hydrogen or hydrocarbyl, e.g. C1-C20-alkyl, C2-C20-alkenyl, C2-C20-alkynyl, C3-C12-cycloalkyl or C6-C20-aryl; or e.g. in case of $-NR''_2$, the two substituents R'' can form a ring, e.g. five- or six-membered ring, together with the nitrogen atom to which they are attached;

R is a bridge of 1-7 atoms, e.g. a bridge of 1-4 C-atoms and 0-4 heteroatoms, wherein the heteroatom(s) can be e.g. Si, Ge and/or O atom(s), wherein each of the bridge atoms may bear independently substituents, such as C1-C20-alkyl, tri(C1-C20-alkyl)silyl, tri(C1-C20-alkyl)siloxy or C6-C20-aryl substituents); or a bridge of 1-3, e.g. one or two, hetero atoms, such as silicon, germanium and/or oxygen atom(s), e.g. $-SiR^1_2-$, wherein each $R^1$ is independently C1-C20-alkyl, C6-C20-aryl or tri(C1-C20-alkyl)silyl- residue, such as trimethylsilyl;

M is a transition metal of Group 3 to 10, preferably of Group 4 to 6, such as Group 4, e.g. Ti, Zr or Hf, especially Hf; each X is independently a sigma-ligand, such as H, halogen, C1-C20-alkyl, C1-C20-alkoxy, C2-C20-alkenyl, C2-C20-alkynyl, C3-C12-cycloalkyl, C6-C20-aryl, C6-C20-aryloxy, C7-C20-arylalkyl, C7-C20-arylalkenyl, $-SR''$, $-PR''_3$, $-SiR''_3$, $-OSiR''_3$, $-NR''_2$ or $-CH_2-Y$, wherein Y is C6-C20-aryl, C6-C20-heteroaryl, C1-C20-alkoxy, C6-C20-aryloxy, $NR''_2$, $-SR''$, $-PR''_3$, $-SiR''_3$, or $-OSiR''_3$;

each of the above mentioned ring moieties alone or as a part of another moiety as the substituent for Cp, X, R'' or $R^1$ can further be substituted e.g. with C1-C20-alkyl which may contain Si and/or O atoms;

n is 0, 1 or 2, e.g. 0 or 1,

m is 1, 2 or 3, e.g. 1 or 2,

q is 1, 2 or 3, e.g. 2 or 3,

wherein m+q is equal to the valency of M.

Suitably, in each X as $-CH_2-Y$, each Y is independently selected from C6-C20-aryl, $NR''_2$, $-SiR''_3$ or $-OSiR''_3$. Most preferably, X as $-CH_2-Y$ is benzyl. Each X other than $-CH_2-Y$ is independently halogen, C1-C20-alkyl, C1-C20-alkoxy, C6-C20-aryl, C7-C20-arylalkenyl or $-NR''_2$ as defined above, e.g. $-N(C1-C20-alkyl)_2$.

Preferably, q is 2, each X is halogen or $-CH_2-Y$, and each Y is independently as defined above.

Cp is preferably cyclopentadienyl, indenyl, tetrahydroindenyl or fluorenyl, optionally substituted as defined above.

In a suitable subgroup of the compounds of formula II, each Cp independently bears 1, 2, 3 or 4 substituents as defined above, preferably 1, 2 or 3, such as 1 or 2 substituents, which are preferably selected from C1-C20-alkyl, C6-C20-aryl, C7-C20-arylalkyl (wherein the aryl ring alone or as a part of a further moiety may further be substituted as indicated above), $-OSiR''_3$, wherein R'' is as indicated above, preferably C1-C20-alkyl.

R, if present, is preferably a methylene, ethylene or a silyl bridge, whereby the silyl can be substituted as defined above, e.g. a (dimethyl)Si=, (methylphenyl)Si= or (trimethylsilylmethyl)Si=; n is 0 or 1; m is 2 and q is two. Preferably, R'' is other than hydrogen.

A specific subgroup includes the well known metallocenes of Zr, Hf and Ti with two $eta^5$-ligands which may be bridged or unbridged cyclopentadienyl ligands optionally substituted with e.g. siloxy, or alkyl (e.g. C1-6-alkyl) as defined above, or with two unbridged or bridged indenyl ligands optionally substituted in any of the ring moieties with e.g. siloxy or alkyl as defined above, e.g. at 2-, 3-, 4- and/or 7-positions. Preferred bridges are ethylene or $-SiMe_2$.

The preparation of the metallocenes can be carried out according or analogously to the methods known from the literature and is within skills of a person skilled in the field. Thus for the preparation see e.g. EP-A-129 368, examples of compounds wherein the metal atom bears a -NR''$_2$ ligand see i.a. in WO-A-9856831 and WO-A-0034341. For the preparation see also e.g. in EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130.

Alternatively, in a further subgroup of the metallocene compounds, the metal bears a Cp group as defined above and additionally a eta$^1$ or eta$^2$ ligand, wherein said ligands may or may not be bridged to each other. Such compounds are described e.g. in WO-A-9613529, the contents of which are incorporated herein by reference.

Further preferred metallocenes include those of formula (I)

$$Cp'_2HfX'_2$$

wherein each X' is halogen, $C_{1-6}$ alkyl, benzyl or hydrogen;
Cp' is a cyclopentadienyl or indenyl group optionally substituted by a $C_{1-10}$ hydrocarbyl group or groups and being optionally bridged, e.g. via an ethylene or dimethylsilyl link. Bis (n-butylcyclopentadienyl) hafnium dichloride and Bis (n-butylcyclopentadienyl) hafnium dibenzyl are particularly preferred:

Metallocene procatalysts are generally used as part of a catalyst system which also includes a cocatalyst or catalyst activator, for example, an aluminoxane (e.g. methylaluminoxane (MAO), hexaisobutylaluminoxane and tetraisobutylaluminoxane) or a boron compound (e.g. a fluoroboron compound such as triphenylpentafluoroboron or triphenylcarbenium tetraphenylpentafluoroborate ($(C_6H_5)_3B^+B-(C_6F_5)_4$)). The preparation of such catalyst systems is well known in the field.

If desired the procatalyst, procatalyst/cocatalyst mixture or a procatalyst/cocatalyst reaction product may be used in unsupported form or it may be precipitated and used as such. One feasible way for producing the catalyst system is based on the emulsion technology, wherein no external support is used, but the solid catalyst is formed from by solidification of catalyst droplets dispersed in a continuous phase. The solidification method and further feasible metallocenes are described e.g. in WO03/051934 which is incorporated herein as a reference.

The activator is a compound which is capable of activating the transition metal component. Useful activators are, among others, aluminium alkyls and aluminium alkoxy compounds. Especially preferred activators are aluminium alkyls, in particular aluminium trialkyls, such as trimethyl aluminium, triethyl aluminium and tri-isobutyl aluminium. The activator is typically used in excess to the transition metal component. For instance, when an aluminium alkyl is used as an activator, the molar ratio of the aluminium in the activator to the transition metal in the transition metal component is from 1 to 500 mol/mol, preferably from 2 to 100 mol/mol and in particular from 5 to 50 mol/mol.

It is also possible to use in combination with the above-mentioned two components different co-activators, modifiers and the like. Thus, two or more alkyl aluminium compounds may be used, or the catalyst components may be combined with different types of ethers, esters, silicon ethers and the like to modify the activity and/or the selectivity of the catalyst, as is known in the art.

Suitable combinations of transition metal component and activator are disclosed among others, in the examples of WO 95/35323.

The polymerisation process for component (C) may be effected analogously to known methods. Where component (C) is unimodal, the polymerisation is preferably a slurry process. If component (C) is bimodal, the process may be a multistage (in-situ) process or the different components may be blended mechanically as known in the art. If component (C) is multimodal, it is preferably prepared in a manner analogous to the process described below for components (A) and (B).

Suitable component (C) polymers are; for example, available commercially from polymer suppliers such as Borealis A/S.

In the first composition comprising at least component (A) and (B), the molecular weight of component (A) must be lower than that of component (B). Components (A) and (B) are formed using Ziegler-Natta catalysis. Such polymers are typically readily distinguishable from those produced using metallocene catalysts (they have broader CBDI, broader Mw/Mn, more heterogeneous branching etc). The use of Ziegler-Natta catalysts to manufacture polyethylenes is well known and will be readily carried out by the skilled man.

Components (A) and (B) preferably form part of a multimodal Ziegler-Natta polyethylene copolymer as the first composition. By multimodal is meant that the polymer should comprise at least two components of differing weight average molecular weights. The different components may both be ethylene copolymers or ethylene homopolymers, although preferably at least one of the components is an ethylene copolymer. Thus, the first composition may also be uni- or preferably multimodal, e.g. bimodal, with respect to the comononer distribution.

Preferably Component (A) has less comonomer than component B by a factor of at least 3 and most preferably it is a homopolymer.

In component (A) or (B), the majority of the monomer units are ethylene, e.g. at least 90% by weight of ethylene. Minor comonomer contributions, e.g. up to 20 %, preferably up to 10% by weight, more preferably up to 5% by weight, may derive from other copolymerizable monomers, generally one or more C3-20, especially C3-10-comonomers, particularly singly or multiply ethylenically unsaturated comonomers, which maybe linear or branched, in particular C3-10 alpha-olefins such as propene, butene, pentene, hexene, heptene, octene, nonene or decene, 4-methyl-pent-1-ene etc. Hex-1-ene, oct-1-ene and but-1-ene comonomers are preferred, especially but-1-ene or hex-1-ene, most especially but-1-ene. Most preferably, comonomer level in component (B) is very low, e.g. in the range 0.03 to 3 wt%, preferably 0.05 to 1.5 wt%.

It may be noted that the term ethylene copolymer is used herein to relate to a polyethylene deriving from ethylene and one or more such copolymerisable comonomers.

The first composition may contain only components (A) and (B) or may contain further polymer components. The amounts of components (A) and (B) in the first composition may range from 5 to 95 wt% to 95 to 5 wt%, 10 to 90 wt% to 90 to 10 wt%, e.g. 35 to 65 wt% to 65 to 35 wt%, preferably 40 to 60 wt% to 60 to 40 wt%. For pipe applications the split might be more even being 45 to 55% each.

Component (A) may form 35 to 55 wt% of the overall polyethylene composition. Component (A) should have a density of greater than 950 kg/m$^3$, e.g. 955 to 980 kg/m$^3$, preferably greater than 960 kg/m$^3$, especially 965 to 975 kg/m$^3$.

Its Mw/Mn is preferably greater than 2.0, e.g. greater than 3.5, preferably more than 5, e.g. more than 7. The upper limit may be 20, e.g. 15.

The MFR$_2$ of component (A) is preferably in the range 1 to 2000 g/10 min, more preferably 10 to 1500 g/10 min, especially 200 to 1000 g/10min. For pipe applications, values around 300 to 900 g/10 min are preferred.

Component (B), which is preferably a copolymer, may form 35 to 55 wt% of the overall polymer composition. Preferably, component (B) should have a Mw/Mn of greater than 2.0, e.g. 3.5 to 20, e.g. 5 to 16, preferably 6 to 12, especially 6 to 9, such as 6-8.

Its density may be less than 960 kg/m$^3$, 915 to 960 kg/m$^3$. For pipe applications, densities are typically lower than 940 kg/m$^3$, e.g. 915 to 930 kg/m$^3$.

The MFR$_{21}$ of component (B) can vary over a broad range, e.g. 0.1 to 100 g/10 min. For pipe applications, lower values are preferred, e.g. 0.1 to 5 g/10 min.

The density of the first polymer composition comprising at least components (A) and (B) is preferably in the range of 925 to 975 kg/m$^3$, more preferably 940 to 960 kg/m$^3$. The MFR$_5$ of the first polymer composition may be of up to 5 g/10 min, preferably 0.1 to 5 g/10 min, more preferably 0.1 to 2 g/10 min.

The overall FRR$_{5/2}$ of the first composition may be 4.5 to 7.0, especially for pipe applications.

As mentioned above, components (A) and (B) generally take the form of a multimodal, e.g. bimodal polymer. By bimodal it is meant that the polymer consists of two fractions (components), one of which has a relatively lower molecular weight and a relatively higher density and another of which has a relatively higher molecular weight and a relatively lower density. Whilst both these components may be copolymers, it is preferred if the lower molecular weight component is an ethylene homopolymer and the higher molecular weight component is an ethylene copolymer.

Where components (A) and (B) are prepared in a multistage polymerisation reaction, it will be appreciated that it will be impossible to measure directly the properties of the second formed component. Nevertheless, the properties of this component can be derived from an analysis of the first polymer composition and the first formed component. Such calculations can be carried out using various techniques, e.g. K. B. McAuley: Modelling, Estimation and Control of Product Properties in a Gas Phase Polyethylene Reactor. Thesis, McMaster University, August 1991. or K. McAuley and J. McMacGregor, AIChE Journal, Vol. 37, no. 6, pages 825 - 835. B. Hagström: Prediction of melt flow rate (MFR) of bimodal polyethylenes based on MFR of their components, in: Conference on Polymer Processing (The Polymer Processing Society), Extended Abstracts and Final Programme, Gothenburg, August 19-21, 1997, 4:13. In addition, subtracting GPC curves, when fractions of each polymer are known is possible.

For the first composition, preferably the ratio,

$$FRR_{5/2} / (MFR_5)^{-0.1}$$

has a value of 3.8 to 6.0, preferably 4.0 to 5.7, most preferably 4.2 to 5.5.

The density of the first composition may again vary depending on the end use of the composition. For pipe applications more than 930 kg/m$^3$, preferably 940 to 960 kg/m$^3$, e.g. 952 to 958 kg/m$^3$ might be more suitable.

The weight average molecular weight of the first composition may be at least 60,000, e.g. 65,000 to 500,000, e.g. 70,000 to 300,000, more preferably 75,000 to 250,000.

The molecular weight distribution (ratio of the weight average molecular weight to the number average molecular weight) of the first composition may be 2-50, preferably 3-40, more preferably 4-30.

Its comonomer content, i.e. non-ethylene monomer units, may be at least 0.1% by weight, e.g. up to 6% by weight. Preferably, the first composition contains 0.2-5% by weight, preferably 0.5-3% by weight, more preferably 0.1 to 2.5 wt%, of non-ethylene monomer units.

Crystalline melting point of the first composition may be between 125 and 140°C, as determined by DSC analysis.

The crystallinity of the first composition may be 50 to 90 %, preferably 60-85%, more preferably 65-80%, as determined by DSC analysis.

Suitable polymers as Component (A) and (B), of the first composition comprising Component (A) and (B), can be any known polymer, e.g. a commercially available polymer, or the polymer can be produced according or analogously to literature known in the field of polymerisation.

Components (A) and (B) are made using Ziegler-Natta polymerisation catalysts. Preferred catalysts comprise a transition metal component and an activator. The transition metal component comprises a metal of Group 4 or 5 of the Periodic System (IUPAC) as an active metal. In addition, it may contain other metals or elements, like elements of Groups 2, 13 and 17. Preferably, the transition metal component is a solid. More preferably, it has been supported on a support material, such as inorganic oxide carrier or magnesium halide. Examples of such catalysts are given, among others in WO 95/35323, WO 01/55230, EP 810235 and WO 99/51646. The catalysts disclosed in WO 95/35323 are especially useful as they are well suited in production of both a polyethylene having a high molecular weight and a polyethylene having a low molecular weight. Thus, especially preferably the transition metal component comprises a titanium halide, a magnesium alkoxy alkyl compound and an aluminium alkyl dihalide supported on an inorganic oxide carrier.

In one embodiment a catalyst of Ziegler Natta type, wherein the active components are dispersed and solidified within Mg-based support by the emulsion/solidification method adapted to PE catalyst, e.g. as disclosed in WO0310651 of Borealis, e.g. according to the principles given in the claims thereof.

In another preferable embodiment, the catalyst is a non-silica supported catalyst, i.e. the active components are not supported to an external silica support. Preferably, the support material of the catalyst is a Mg-based support material. Examples of such preferred Ziegler-Natta catalysts are described in EP0810235.

In principle any polymerisation method including solution, slurry and gas phase polymerisation can be used for producing the polyethylene composition of the invention as well as its components.

The components (A) and (B) can be produced separately and blended mechanically (so called mechanical blending) or may preferably be produced in a multistage process using one or more polymerisation reactors, which may be the same or different, e.g. at least slurry-slurry, gas phase-gas phase or any combination of slurry and gas phase polymerisations. Each stage may be effected in parallel or sequentially using same or different polymerisation method. In case of a sequential stages each component, e.g. (A) and (B), may be produced in any order. Preferably, the catalyst used in the preceding steps is present in the subsequent polymerisation step(s). Alternatively, further catalyst, which can be the same or different than that used in the preceding step, can be added in the subsequent step(s).

Preferably, at least one component (A) or (B) is produced in a slurry reactor, preferably in a loop reactor. The other components is preferably produced by gas phase polymerization in a gas phase reactor.

It is within the scope of the invention however for a multimodal, e.g. at least bimodal, polymer composition, e.g. the first composition, to be produced by blending each or part of the components in-situ during the polymerisation process thereof (so called in-situ process) or, alternatively, by blending mechanically two or more separately produced components in a manner known in the art.

It is also possible to produce a multimodal polymer composition in one reactor by selecting e.g. one or more of the following: (1) changing polymerisation conditions, and (2) using at least two different catalysts.

In one embodiment the process for producing the first polymer composition comprises:

(a) polymerising in a slurry reactor zone, preferably a loop reactor, ethylene, optionally together with one of more comonomers, in the presence of a Ziegler-Natta polymerisation catalyst to produce the first polymer component, and, optionally, transferring the reaction product of step (a) to a subsequent gas phase reactor zone,

(b) polymerising in a gas phase reactor zone ethylene, optionally together with one or more comonomers, in the presence of the reaction product of step (a) to produce a second polymer component.

and recovering the obtained composition.

A preferred multistage process is a "loop-gas phase"-process, such as developed by Borealis (known as BORSTAR® technology) described e.g. in patent literature, such as in EP 0887 379 or EP 517 868.

If the polymer composition is multimodal, the LMW fraction is preferably produced in step (a) and the HMW fraction is produced in a subsequent step (b) in the presence of component (A) as obtained from the first reactor.

Optionally, the process can further comprise a prepolymerisation step in a manner known in the field, which prepolymerisation step may precede e.g. step (a).

The process of the invention is preferably a continuous process. The conditions for the slurry reactor, preferably loop reactor, of step (a) may be as follows:

- a diluent is used, which diluent can be an aliphatic hydrocarbon in a manner known in the art - the boiling point of the diluent may be 710 to +100°C;
- the temperature is within the range of 40°C to 110°C, preferably between 60°C and 100°C or 70 - 110 °C (in some applications even 85-110°C may be used):
- the pressure is at least 5 bar, typically within the range of 20 bar to 80 bar, preferably between 30 bar to 70 bar, e.g. 30 to 50 bar;
- hydrogen can be added for controlling the molar mass in a manner known per se;
- the residence time is typically 0.5 to 5 hours, e.g. 0.5 to 1 hr.

The reaction mixture from the slurry (loop) reactor is transferred to the gas phase reactor, i.e. to step (b), in a known manner and conditions in step (b) are preferably as follows:

- the temperature is within the range of 50°C to 130°C, preferably between 60°C and 115 °C,
- the pressure is within the range of 10 bar to 60 bar, preferably between 10 bar to 40 bar,
- hydrogen can be added for controlling the molar mass in a manner known per se
- the residence time is typically 1 to 8 hours

The properties of the polymer composition can be adjusted or controlled in a known manner e.g. with one or more of the following process parameters: hydrogen feed, comonomer feed, monomer feed, catalyst feed and residence times in the reactor. As well known, the adjustment of said MFR values to a desired level may be effected during the polymerisation process by adjusting and controlling the process conditions, e.g. by regulating the molecular weight of the polymerisation product using a molecular weight regulator, e.g. hydrogen. The above described process of the invention enable highly feasible means for producing and further tailoring the polymer composition of the invention.

The gas phase polymerisation may be conducted in a manner known in the art, such as in a bed fluidised by gas feed or in mechanically agitated bed. Also fast fluidisation may be utilised.

Suitable bimodal polymers of use in this invention are, for example, commercially available from polymer suppliers such as Borealis A/S.

To form the final composition, component (C) may be blended, e.g. mechanically blended, with components (A) and (B) using conventional blending apparatus. Blending may be conveniently effected in an extruder. After the first composition polymer is collected from the reactor and the hydrocarbon residues are removed therefrom, component C is added and the polymer is compounded and extruded to pellets. In this process step, any extruder known in the art may be used. It is preferred, however, to use a twin screw extruder. It may be of a co-rotating type, such as those produced by Werner & Pfleiderer having a designation ZSK. Alternatively, it may be of a counter-rotating type, such as those produced by Japan Steel Works, having a designation JSW CIM-P, e.g. CIM90P or LCM continuous mixer by Kobe Steel, such as LCM500H, or Farrel continuous mixer (FCM) by Farrel. It is especially preferred to use a counter-rotating twin screw extruder.

The extruder may contain one or more gear pumps and throttle valves. This equipment can be used to improve the homogeneity of the polymer composition or to increase the capacity of the extruder. Such a solution is disclosed, among others, by T. Fukui and R. Minato: "LCM Continuous Mixer/Gear Pump System for Polyolefin Resins", Society of Plastics Engineers Polyolefins VII International Conference, February 24-27, 1991, Wyndham Greenspoint Hotel, Houston, Texas.

Before the extrusion the polymer may be mixed with the desired additives.

Alternatively, the component (C) may be blended with components (A) and (B) in-situ in a multistage process, whereby the components (A), (B) and (C) may be produced in any order in the presence of any previous component(s), by changing, when needed, the appropriate catalyst.

The final polymer composition may have one or more of the following features:

$MFR_2$ of less than 0.2 g/10 min, preferably less than 0.1 g/10 min measured according to ISO 1133 at 190°C and under 2.16 kg load.

$MFR_5$ of less than 5 g/10 min, preferably less than 2 g/10min, e.g. less than 1 g/10 min. The $MFR_5$ for pipe applications might be 0.1 to 2.0 g/10min, e.g. 0.2 to 0.35 g/10min.

The $MFR_{21}$ for pipe applications may be greater than 3 g/10 min, preferably more than 4, more preferably more than 5 g/10min.

All the preferred embodiments described above and in the passages which follow apply to all embodiments of the invention described herein. The combination of any range or property quoted in this application with any other range or property quoted in this application is disclosed.

The final composition of the invention may have a FRR$_{5/2}$ of up to 20, e.g. up to 10, preferably 3 to 5. Preferably, the ratio,

$$FRR_{5/2} / (MFR_5)^{-0.1}$$

has a value of 3.8 to 6.0 preferably 4.1 to 5.5, most preferably 4.2 to 5.2.

Density of 940-975 kg/m$^3$, preferably 945-970 kg/m$^3$, in particular 950-965 kg/m$^3$.

Comonomer content in the final composition may be up to 5% by weight, e.g. 0.01-4% by weight, preferably 0.02-1% by weight, more preferably 0.03 to 0.7 wt% as measured by FTIR.

The crystalline melting point may be between 125 and 140°C, as determined by DSC analysis. The crystallinity is typically 50-85%, more preferably 65-80%, as determined by DSC analysis.

For pipe applications the composition may have a SHI 5/50 of 2 to 10, e.g. 3 to 8. Alternatively SHI 2.7/210 may be up to 300, preferably 10 to 200.

The polyethylene composition may contain minor amounts of additives such as pigments, nucleating agents, antistatic agents, polymer processing agent, fillers, antioxidants, UV stabilisers as is known in the art.

When compared to conventional bimodal polyethylene the polymer compositions of the invention are believed to possess improved impact resistance and wear properties (e.g. abrasion resistance). When compared to a composition comprising a unimodal ZN and mLLDPE component, the compositions of the invention possess lower viscosity at higher shear rates leading to improved processability, improved melt strength (of particular importance in pipe applications to prevent sagging), improved CTL, and improved creep. The compositions of the invention are also believed to provide low permeability and smooth surfaces.

Thus, the charpy impact strength (23°C) of the polymer composition may be at least 20 kJ/m$^2$.

The charpy impact strength at -20°C, according to ISO 179-3 on compression moulded plates should be at least 4.0 kJ/m$^2$, preferably at least 6.0 kJ/m$^2$, preferably at least 7.0 kJ/m$^2$, especially at least 8.0 kJ/m$^2$.

It is also envisaged that the improvements in Charpy do not detrimentally affect stress crack measured as CTL. CTL of the composition of the invention should therefore be at least 300 hours, preferably at least 500 hours, preferably at least 550 hours, especially at least 600 hours.

As mentioned above, the polyethylene composition of the invention possesses an excellent balance of mechanical and processing properties. This is particularly clear if the relationship between various parameters is considered. Thus, the composition of the invention possess an excellent charpy to MFR relationship characterised by the equation:

$$Charpy(-20°C) > A \cdot (MFR_5)^B$$

where B = -0.26 and A is 5.5, preferably 5.8 and more preferably 6.6.

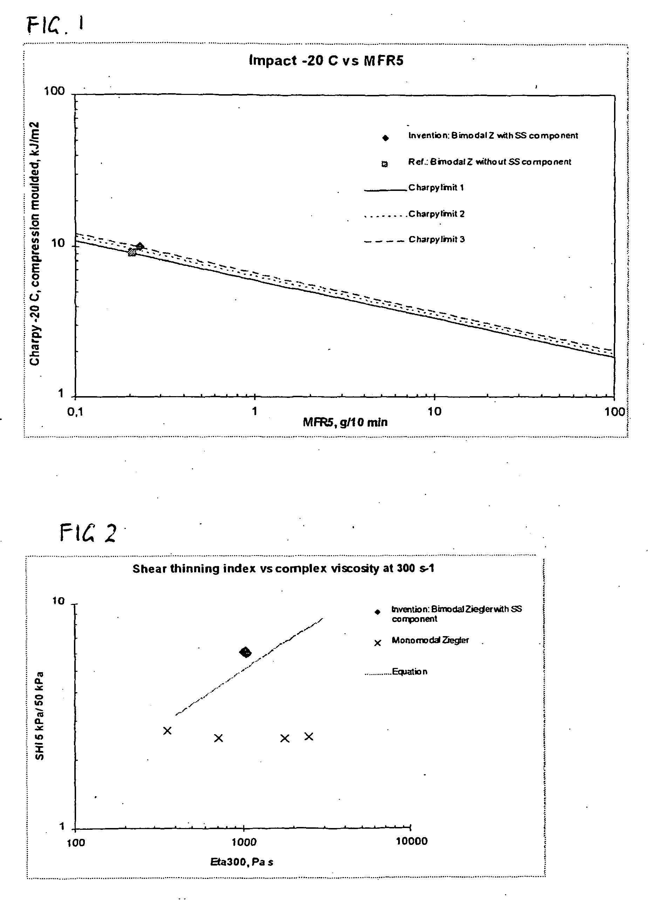

Figure 1 shows the line this equation gives for the various constants and plots compositions of the invention relative to bimodal Ziegler-Natta materials without the second unimodal metallocene composition. It is a double log plot. The chemist seeks high MFR, high impact materials but the higher the MFR the lower the impact. The claimed compositions provide an excellent balance of these properties.

The relationship between Charpy and CTL is also advantageous. The ratio

$$CTL / MFR_5^{-0.75} \cdot 10^{(-0.002 \cdot (Modulus - 1500))}$$

may have a value of at least 80, preferably at least 90, more preferably at least 100 where modulus is flexural modulus. Thus, the compositions of the invention possess higher CTL values at the same MFR and modulus.

Rheology is another important feature of the polymer compositions of the invention. Preferably, the ratio:

$$\text{SHI (5kPa/50kPa) / ((Eta300/200))}^{0.5}$$

should have a value of 4.7 to 9, preferably 5 to 8, more preferably 5.3 to 7.5 and most preferably 5.5 to 7.

This is plotted in Figure 2 and clearly shows that the compositions of the invention have advantageous properties over monomodal Ziegler species. The figure shows that the compositions of the invention have higher shear rates at low viscosity than monomodal Ziegler compositions meaning improvements in processability thereover.

The compositions of the invention also preferably satisfy the following equation:

$$\text{FRR}_{5/2} \geq 3.2 \cdot ((\text{MFR}_5)/40)^K$$

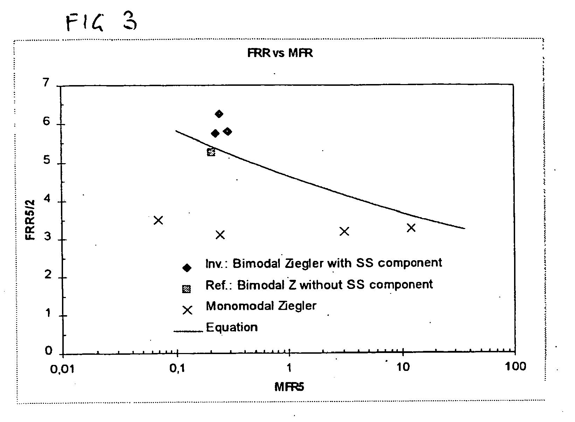

where K is -0.03, preferably -0.04 especially -0.06. This equation is plotted in Figure 3 and shows that the polymers of the invention show higher $\text{MFR}_5$ at the same $\text{FRR}_{5/2}$.

The polymer composition of the invention may be provided in pellet or powder form, preferably powder.

Viewed from another aspect the invention provides a pipe or use of a composition as hereinbefore described in the manufacture of pipes.

Viewed from a further aspect the invention provides a process for the preparation of a composition as hereinbefore described comprising:

polymerising ethylene or ethylene and at least one alpha olefin comonomer in the presence of a Ziegler-Natta catalyst so as to form up to 60 wt% lower molecular weight (LMW) polyethylene homopolymer or copolymer component (A) having a density of at least 940 kg/m$^3$;

polymerising ethylene or ethylene and at least one alpha olefin comonomer in the presence of a Ziegler-Natta catalyst so as to form up to 60 wt% higher molecular weight (HMW) polyethylene copolymer component (B) having lower density than component (A); and

polymerising ethylene or ethylene and at least one alpha olefin comonomer in the presence of a single site catalyst to form up to 30% wt of polyethylene homo or copolymer having a density of up to 980 kg/m$^3$;

and blending said components in any order to form a composition which has having a CTL of at least 300 h and density at least of 925 kg/m$^3$.

Blending can be effected by in-situ polymerisation in a multistage process or by blending mechanically all or part, e.g. component (C), of the components to the other components as described above.

Viewed from another aspect the invention provides a process for the preparation of a pipe comprising:

(I) In a first, preferably slurry phase, stage polymerising ethylene in the presence of a Ziegler-Natta catalyst so as to form up to 60 wt% lower molecular weight (LMW) polyethylene homopolymer or copolymer component (A) having a density of at least 940 kg/m$^3$;

(II) In a subsequent, preferably gas phase, stage polymerising ethylene and at least one alpha olefin comonomer in the presence of the same Ziegler-Natta catalyst so as to form up to 60% higher molecular weight (HMW) polyethylene copolymer component (B) having lower density than component (A);

(III) blending, preferably mechanically the product of stage (II) with up to 30% wt of polyethylene homo or copolymer obtained by single site catalysis (SSC) and having a density of up to 980 kg/m$^3$; and density at least of 925 kg/m$^3$; and

(IV) forming the product of step (III) into a pipe.

Viewed from a further aspect the invention provides a process for the preparation of a polymer composition as hereinbefore described comprising steps (I) to (III) above.

It will be appreciated that the process above can be adapted to form any of the polyethylene compositions of the invention and hence pipes therefrom.

In these processes it is preferred if the first composition in powder form is mixed with component (C) prior to extrusion in a polymer plant. Component (C) could also be added to the first composition through a side feed in an extruder however. The compositions of the invention are primarily of use in the manufacture of pipes. Pipe manufacture can be carried out using well known procedures. Pipes can be used to carry hot or cold water, gas, sewage or any other suitable material.

It will be understood that the composition of the invention may be mixed with other polymer components to form polymer blends.

The invention will now be described further with reference to the following non-limiting examples and Figures.

**Brief Description of the Figures**

Figure 1 shows the relationship between Charpy Impact and MFR5 for a composition of the invention relative to a bimodal Ziegler-Natta polymer with no single site component.

Figure 2 shows the relationship between Shear Thinning index and complex viscosity for a composition of the invention relative to a monomodal Ziegler-Natta polymer.

Figure 3 shows the relationship between FRR and MFR5 for a composition of the invention relative to a bimodal Ziegler-Natta polymer with no single site component and monomodal Ziegler-Natta polymer.

**Analytical Tests**

Density of the materials is measured according to ISO 1183:1987 (E), method D, with isopropanol-water as gradient liquid. The cooling rate of the plaques when crystallising the samples was 15 C/min.

$MFR_2$, $MFR_5$ and $MFR_{21}$ are measured according to ISO 1133 at 190°C at loads of 2.16, 5 and 21.6 kg respectively.

$FRR_{5/2}$ ratio denotes $MFR_5/MFR_2$ , wherein $MFR_5$ and $MFR_2$ are as defined above. Mw, Mn and Mw/Mn (MWD) are measured by size exclusion chromatography (SEC).

Flexural modulus is measured on compression moulded plates according to ISO 178 at 23°C with speed 2 mm/min. The typical ratio of results between this flexural modulus and above tensile modulus is 1.08.

Charpy impact at temperatures -20 and + 23 C were measured on compression moulded plaques made according to ISO 10350-1 (1998-11-15) - option Charpy ISO 179-1 with V-notch, type A. Charpy impact on injection moulded plaques were measured similarly.

Rheology of the polymers was determined by frequency sweep at 190 C under nitrogen atmosphere according to ISO 6721-10, using Rheometrics RDA II Dynamic Rheometer with parallel plate geometry, 25 mm diameter plate and 1.2 mm gap . The measurements gave storage modulus (G'), loss modulus (G") and complex modulus (G*) together with the complex viscosity ($\eta$*), all as a function of frequency ($\omega$) These parameters are related as follows: For any frequency $\omega$: The complex modulus: $G^* = (G'^2 + G''^2)^{1/2}$. The complex viscosity: $\eta^* = G^*/\omega$.

According to the empirical Cox-Merz rule, for a given polymer and temperature, the complex viscosity as function of frequency (given in rad/s) measured by this dynamic method is the same as the viscosity as a function of shear rate for steady state flow (e.g. a capillary).

Shear thinning, that is the decrease of viscosity with G*, becomes more pronounced when the molecular weight distribution (e.g. as measured by SEC for linear polymers) broadens. This property can be characterised by the shear thinning index, SHI, which is the ratio of the viscosity at a lower stress and the viscosity at a higher shear stress. A polymer with broad molecular weight distribution will have a higher SHI than one with a more narrow. Two polymers of equal molecular weight distribution broadness as seen by SEC, but of different molecular weights, will have about equal SHI. In the examples, shear stresses (or G*) of 5 and 50 kPa were used as basis. Thus:

$$SHI\_5\_kPa/50\_Pa = \eta * (G^* = 5kPa)/\eta^* (G^* = 50\ kPa)$$

SHI2.7/210 is measured analogously.

The CTL test is done with reference to ISO 6252 -1992 (E), with the notch according to ASTM 1473, in the following way:

The CTL test is a test for accelerated slow crack growth where the acceleration is maintained by elevated temperature of 60 °C. The testing is performed in a surface active solution and the incorporation of a notch both accelerates the time to failure and ensures a plain strain in the samples.

The stress in the samples was 7.0 MPa (actual stress in the notched region). The surfactant used in the test was IGEPAL CO-730 (chemical substance: nonyl phenyl polyethylene glycol ether) at a temperature of 60 °C.

The samples are prepared by pressing a plaque with a total length of 125 to 130 mm and a width at its ends of 21 ± 0.5 mm. The plaque then is milled into the right dimensions in a fixture on two of the sides with a centre distance of both holders of 90 mm and a hole diameter of 10 mm. The central part of the plaque has a parallel length of 30 ± 0.5 mm, a width of 9 ± 0.5 mm, and a thickness of 6 ± 0.5 mm.

A front notch of 2.5 mm depth is then cut into the sample with a razor blade fitted into a notching machine (PENT-NOTCHER, Norman Brown engineering), the notching speed is 0.2 mm/min. On the two remaining sides side grooves of 0.8 mm are cut which should be coplanar with the notch. After making the notches, the sample is conditioned in 23 ± 1°C and 50% relative humidity for at least 48 h. The samples are then mounted into a test chamber in which the active solution (10 % water solution of IGEPAL CO-730) is kept. The samples are loaded with a dead weight and at the moment of breakage an automatic timer is shut off.

**Preparation Example 1**

**Bimodal Ziegler-Natta Material**

The bimodal Ziegler-Natta material was made following the teaching of EP-A-1095102 and EP-A-1460105. $MgCl_2$-supported Ziegler catalyst was fed into a continuous loop reactor, along with ethylene and hydrogen to give a polymer with $MFR_2$ of 470 g/10min and density 975 $kg/m^3$. 50 wt% of the total polymer production was made in this reactor. The polymer containing the catalyst was semi-continuously transferred to a fluidised gas phase reactor. Here was additionally fed hydrogen and 1-hexene. The gas phase reactor temperature was 85°C. The density of this fraction was 933 $kg/m^3$.

Final $MFR_5$ was 0.2 g/10min and final density 954 $kg/m^3$. Carbon black masterbatch and phenolic antioxidants were added in the compounding and pelletizing step.

**Preparation Example 2**

Ethylene hexene resins were produced using bis(n-butylcyclopentadienyl) hafnium dichloride catalyst in a slurry loop reactor at the following conditions:

| | |
|---|---|
| Pressure | 42 bar |
| C2 amount | 4 wt% |
| C6/C2: | 0.35 |
| Temp. | 86°C |
| Residence time: | 40 to 60 mins |

The resulting polymer (Sample 3) has a MFR2 of 1.3 g/10min and a density of 922 $kg/m^3$. Other samples were produced analogously.

The following metallocene produced grades were used in the preparation of polymer blends.

Table 1

| | Density | $MFR_2$ | $M_w$ | Hexene (wt%) | Comment |
|---|---|---|---|---|---|
| Sample 1 | 940 | 4 | 80,000 | 1.5 | Unimodal SSC |
| Sample 2 | 934 | 1.3 | 140.000 | 2.2 | Unimodal SSC |
| Sample 3 | 922 | 1.3 | 130.000 | 5.1 | Unimodal SSC |

The following blends were prepared (wt%)

Table 2

| Polymer | Comp Ex 1 | Ex 2 | Ex 3 | Ex 4 | Ex 5 |
|---|---|---|---|---|---|
| Prep 1 | 100 wt% | 92 | 88 | 96 | 96 |
| Sample 1 | | | | 4 | |
| Sample 2 | | | 10 | | |
| Sample 3 | | 4 | | | 4 |
| LMW Adjuster* | | 4 | 2 | | |

*The LMW adjuster is an ethylene homopolymer having $MFR_2$=320 g/10min and density 974 kg/m$^3$ and is added to ensure that the MFR of each blend was approximately the same. It too was made following the teaching of EP-A-1095102 and EP-A-1460105.

Table 3 shows the results from rheology, MFR, density and mechanical testing.

| | | Comp Ex 1 | Ex 2 | Ex 3 | Ex 4 | Ex 5 | Monomodal Ziegler Ref |
|---|---|---|---|---|---|---|---|
| Density | (kg/m$^3$) | 965.7 | 964 | 962.1 | 961 | 963.1 | |
| $MFR_2$ | g/10min | 0.04 | 0.05 | 0.06 | 0.04 | 0.04 | 0.02 |
| MFR5 | g/10min | 0.21 | 0.29 | 0.3 | 0.25 | 0.23 | 0.07 |
| MFR21 | g/10min | 9.92 | 13.1 | 11.65 | 11.37 | 10.14 | |
| FRR5/2 | - | 5.25 | 5.80 | 5.00 | 6.25 | 5.75 | 3.50 |
| MFR21/2 | - | 47 | 45 | 39 | 45 | 44 | |
| eta300 | Pa s | 1,090 | 1,010 | 1,070 | 1,050 | 1,050 | 2,437 |
| SHI(5/50) | - | 5.52 | 6.05 | 6.01 | 6.15 | 5.97 | 2.54 |
| Failure type Charpy 23°C CM | - | partial | partial | partial | partial | partial | |
| Failure type -20°C CM | - | complete | complete | complete | complete | hinged | |
| Charpy 23°C CM | kJ/m$^2$ | 25.4 | 22.1 | 23.1 | 23.9 | 25.9 | |
| Charpy -20°C CM | kJ/m$^2$ | 8.88 | 7.31 | 7.15 | 7.79 | 10 | |
| Flexural modulus | MPa | 1377 | 1366 | 1312 | 1363 | 1327 | |
| Eta 5kPa | Pa s | 332,363 | 246,037 | 218,797 | 292,230 | 273,666 | 346,665 |
| Eta 50kPa | Pa s | 60,241 | 40,663 | 36,414 | 47,551 | 45,865 | 136,469 |
| CTL, 7.0 MPa | h | 430 | 582 | 635 | 582 | 700 | |
| (Charpy -20 C)/( (MFR5)^(-0.26)) | - | 5.92 | | | | 6.82 | |
| CTL/(MFR5^-0.75*10^(-0.002*(Modulus-1500))) | - | 76 | 124 | 108 | 109 | 105 | |
| FRR5/2)/MFR5)^0.1 | - | 4.49 | 5.12 | 4.43 | 5.44 | 4.96 | 2.68 |

(continued)

| | | Comp Ex 1 | Ex 2 | Ex 3 | Ex 4 | Ex 5 | Monomodal Ziegler Ref |
|---|---|---|---|---|---|---|---|
| (SHI 5 kPa/50)/( (Eta300/200) ^0.5) | - | 5,28 | 6,02 | 5,81 | 6,00 | 5,82 | 1.63 |

**Claims**

1. A polyethylene composition comprising at least a first composition and a second composition in amounts of at least 70 wt% of the first composition which comprises at least:

   (A) up to 60 wt%, lower molecular weight (LMW) polyethylene homo or copolymer obtained by Ziegler-Natta catalysis having a density of at least 940 kg/m$^3$; and
   (B) up to 60 wt%, higher molecular weight (HMW) polyethylene homo or copolymer obtained by Ziegler-Natta catalysis and having lower density than component (A); and
   up to 30 wt% of the second composition which comprises at least:
   (C) a polyethylene homo or copolymer obtained by single site catalysis (SSC) and having a density of up to 980 kg/m$^3$,

   wherein said polyethylene composition has an MFR$_5$ less than 5 g/10 min and a density at least of 925 kg/m$^3$.

2. A polyethylene composition comprising at least a first composition and a second composition in amounts of at least 70 wt% of the first composition which comprises at least:

   (A) up to 60 wt% lower molecular weight (LMW) polyethylene homo or copolymer obtained by Ziegler-Natta catalysis having a density of at least 940 kg/m$^3$; and
   (B) up to 60 wt% higher molecular weight (HMW) polyethylene homo or
   copolymer obtained by Ziegler-Natta catalysis and having lower density than component (A); and
   up to 30 wt% of the second composition which comprises at least:
   (C) a polyethylene homo or copolymer obtained by single site catalysis (SSC) and having a density of up to 980 kg/m$^3$,

   wherein said polyethylene composition has a CTL of at least 300 hours and density at least of 925 kg/m$^3$.

3. A polyethylene composition comprising at least a first composition and a second composition in amounts of at least 70 wt% of the first composition which has a density of 925 to 975 kg/m$^3$ and an MFR$_5$ of 0.1 to 5 g/10 min, and which first composition comprises at least

   (A) up to 60 wt%, lower molecular weight (LMW) polyethylene homo or copolymer obtained by Ziegler-Natta catalysis having a density of at least 940 kg/m$^3$; and
   (B) up to 60 wt%, higher molecular weight (HMW) polyethylene homo or copolymer obtained by Ziegler-Natta catalysis and having lower density than component (A); and
   up to 30 wt% of the second composition which comprises at least:
   (C) a polyethylene homo or copolymer obtained by single site catalysis (SSC) and having a density of up to 980 kg/m$^3$,

   wherein said polyethylene composition has a density at least of 925 kg/m$^3$.

4. A polyethylene composition as claimed in claim 3 wherein the first composition has an FRR$_{5/2}$ of 4.5 to 7.0.

5. A composition as claimed in any preceding claim wherein the density of component (C) is less than 960 kg/m$^3$.

6. A composition as claimed in any of the preceding claims wherein the component (C) is a copolymer with one or more of butene, hexene and octene.

7. A composition as claimed in any of preceding claims wherein the lower molecular weight ethylene polymer component (A) is homopolymer component and has a density of at least 965 kg/m$^3$.

8. A composition as claimed in any of preceding claims wherein the lower molecular weight ethylene component (A) is a homopolymer and has a Mw/Mn of 3.5 to 20.

9. A composition as claimed in any of preceding claims wherein the higher molecular weight ethylene component (B) is a copolymer and has a density of less than 960 kg/m$^3$.

10. A composition as claimed in any of preceding claims wherein the higher molecular weight ethylene copolymer component (B) has a Mw/Mn of 3.5 to 20.

11. A composition as claimed in any of preceding claims wherein the higher molecular weight ethylene copolymer component (B) comprises hexene.

12. A composition as claimed in any of preceding claims wherein the higher molecular weight ethylene (co)polymer component (B) forms 35 to 45%wt of the blend of component (A) and component (B).

13. A composition as claimed in any of preceding claims wherein the density of said composition is at least 940 kg/m$^3$.

14. A composition as claimed in any of preceding claims wherein Component (C) forms between 3 to 15% wt of the composition.

15. A composition as claimed in any of preceding claims wherein the lower molecular weight component (A) has an MFR$_2$ of 10 to 2000 g/10min.

16. A composition as claimed in any of the preceding claims wherein the MFR2 of the composition is less than 0.1 g/10min.

17. A composition as claimed in any of the preceding claims which satisfies the equation:

$$Charpy(-20°C) > A \cdot (MFR_5)^B$$

where B = -0.26 and A is 5.5.

18. A composition as claimed in any of preceding claims for which the ratio:

$$SHI (5kPa/50kPa) / ((Eta300/200))^{0.5}$$

is between 4.7 to 9.

19. A composition as claimed in any of preceding claims which satisfies the equation:

$$FRR_{5/2} \geq 3.2 \cdot ((MFR_5)/40)^K$$

where K is -0.03.

20. A composition as claimed in any of the preceding claims for which the ratio:

$$CTL / MFR_5^{-0.75} \cdot 10^{(-0.002 \cdot (Modulus - 1500))}$$

is at least 80 wherein modulus is flexural modulus.

21. A composition as claimed in any of the preceding claims wherein the Mw of component (C) is less than 150,000.

22. A composition as claimed in any of the preceding claims wherein the CTL of the composition is at least 500 hours.

23. Use of a composition as claimed in any of preceding claims in pipe manufacture.

24. Pipes comprising the composition of any of the preceding claims.

25. A process for the preparation of a composition as claimed in any of claims 1 to 22 comprising:

polymerising ethylene or ethylene and at least one alpha olefin comonomer in the presence of a Ziegler-Natta catalyst so as to form up to 60 wt% lower molecular weight (LMW) polyethylene homopolymer or copolymer component (A) having a density of at least 940 kg/m³;
polymerising ethylene or ethylene and at least one alpha olefin comonomer in the presence of a Ziegler-Natta catalyst so as to form up to 60 wt% higher molecular weight (HMW) polyethylene copolymer component (B) having lower density than component (A); and
polymerising ethylene or ethylene and at least one alpha olefin comonomer in the presence of a Single site catalyst to form up to 30% wt of polyethylene homo or copolymer having a density of up to 980 kg/m³;
and blending said components in any order to form a composition which has a density at least of 925 kg/m³.

26. A process for the preparation of a pipe comprising:

(I) In a first, preferably slurry phase, stage polymerising ethylene in the presence of a Ziegler-Natta catalyst so as to form up to 60 wt% lower molecular weight (LMW) polyethylene homopolymer or copolymer component (A) having a density of at least 940 kg/m³;
(II) In a subsequent, preferably gas phase, stage polymerising ethylene and at least one alpha olefin comonomer in the presence of the same Ziegler-Natta catalyst so as to form up to 60% higher molecular weight (HMW) polyethylene copolymer component (B) having lower density than component (A);
(III) blending the product of stage (II) with up to 30% wt of polyethylene homo or copolymer obtained by single site catalysis (SSC) and having a density of up to 980 kg/m³.
whereby to form a composition having a density at least of 925 kg/m³; and (IV) forming the product of step (III) into a pipe.

**Patentansprüche**

1. Polyethylenzusammensetzung, die zumindest eine erste Zusammensetzung und eine zweite Zusammensetzung in folgenden Mengen aufweist:

mindestens 70 Gew.-% der ersten Zusammensetzung, die zumindest folgendes umfaßt:

(A) bis zu 60 Gew.-% eines Polyethylenhomo- oder -copolymers mit geringerem Molekulargewicht (LMW), das durch Ziegler-Natta-Katalyse erhalten wurde, mit einer Dichte von mindestens 940 kg/m³; und
(B) bis zu 60 Gew.-% eines Polyethylenhomo- oder -copolymers mit höherem Molekulargewicht (HMW), das durch Ziegler-Natta-Katalyse erhalten wurde und eine geringere Dichte als die Komponente (A) aufweist; und
bis zu 30 Gew.-% der zweiten Zusammensetzung, die zumindest folgendes umfaßt:
(C) ein Polyethylenhomo- oder -copolymer, das durch Katalyse mit einheitlichen aktiven Zentren (SSC) erhalten wurde und eine Dichte von bis zu 980 kg/m³ aufweist,

wobei die Polyethylenzusammensetzung einen $MFR_5$-Wert von weniger als 5 g/10 min und eine Dichte von min-

destens 925 kg/m$^3$ aufweist.

2. Polyethylenzusammensetzung, die zumindest eine erste Zusammensetzung und eine zweite Zusammensetzung in folgenden Mengen aufweist:

mindestens 70 Gew.-% der ersten Zusammensetzung, die zumindest folgendes umfaßt:

(A) bis zu 60 Gew.-% eines Polyethylenhomo- oder -copolymers mit geringerem Molekulargewicht (LMW), das durch Ziegler-Natta-Katalyse erhalten wurde, mit einer Dichte von mindestens 940 kg/m$^3$; und
(B) bis zu 60 Gew.-% eines Polyethylenhomo- oder -copolymers mit höherem Molekulargewicht (HMW), das durch Ziegler-Natta-Katalyse erhalten wurde und eine geringere Dichte als die Komponente (A) aufweist; und
bis zu 30 Gew.-% der zweiten Zusammensetzung, die zumindest folgendes umfaßt:
(C) ein Polyethylenhomo- oder -copolymer, das durch Katalyse mit einheitlichen aktiven Zentren (SSC) erhalten wurde und eine Dichte von bis zu 980 kg/m$^3$ aufweist,

wobei die Polyethylenzusammensetzung einen CTL-Wert von mindestens 300 Stunden und eine Dichte von mindestens 925 kg/m$^3$ aufweist.

3. Polyethylenzusammensetzung, die zumindest eine erste Zusammensetzung und eine zweite Zusammensetzung in folgenden Mengen aufweist:

mindestens 70 Gew.-% der ersten Zusammensetzung, die eine Dichte von 925 bis 975 kg/m$^3$ und einen MFR$_5$-Wert von 0,1 bis 5 g/10 min aufweist, und wobei die erste Zusammensetzung zumindest folgendes umfaßt:

(A) bis zu 60 Gew.-% eines Polyethylenhomo- oder -copolymers mit geringerem Molekulargewicht (LMW), das durch Ziegler-Natta-Katalyse erhalten wurde, mit einer Dichte von mindestens 940 kg/m$^3$; und
(B) bis zu 60 Gew.-% eines Polyethylenhomo- oder -copolymers mit höherem Molekulargewicht (HMW), das durch Ziegler-Natta-Katalyse erhalten wurde und eine geringere Dichte als die Komponente (A) aufweist; und
bis zu 30 Gew.-% der zweiten Zusammensetzung, die zumindest folgendes umfaßt:
(C) ein Polyethylenhomo- oder -copolymer, das durch Katalyse mit einheitlichen aktiven Zentren (SSC) erhalten wurde und eine Dichte von bis zu 980 kg/m$^3$ aufweist,

wobei die Polyethylenzusammensetzung eine Dichte von mindestens 925 kg/m$^3$ aufweist.

4. Polyethylenzusammensetzung nach Anspruch 3, wobei die erste Zusammensetzung einen FRR$_{5/2}$-Wert von 4,5 bis 7,0 aufweist.

5. Zusammensetzung nach einem der vorstehenden Ansprüche, wobei die Dichte der Komponente (C) weniger als 960 kg/m$^3$ beträgt.

6. Zusammensetzung nach einem der vorstehenden Ansprüche, wobei die Komponente (C) ein Copolymer mit einem oder mehreren von Buten, Hexen und Octen ist.

7. Zusammensetzung nach einem der vorstehenden Ansprüche, wobei die Komponente (A) aus dem Ethylenpolymer mit geringerem Molekulargewicht eine Homopolymerkomponente ist und eine Dichte von mindestens 965 kg/m$^3$ aufweist.

8. Zusammensetzung nach einem der vorstehenden Ansprüche, wobei die Ethylenkomponente (A) mit geringerem Molekulargewicht ein Homopolymer ist und ein Mw/Mn von 3,5 bis 20 aufweist.

9. Zusammensetzung nach einem der vorstehenden Ansprüche, wobei die Ethylenkomponente (B) mit höherem Molekulargewicht ein Copolymer ist und eine Dichte von weniger als 960 kg/m$^3$ aufweist.

10. Zusammensetzung nach einem der vorstehenden Ansprüche, wobei die Komponente (B) aus dem Ethylencopolymer mit höherem Molekulargewicht ein Mw/Mn von 3,5 bis 20 hat.

**11.** Zusammensetzung nach einem der vorstehenden Ansprüche, wobei die Komponente (B) aus dem Ethylencopolymer mit höherem Molekulargewicht Hexen umfaßt.

**12.** Zusammensetzung nach einem der vorstehenden Ansprüche, wobei die Komponente (B) aus dem (Co)polymer mit höherem Molekulargewicht 35 bis 45 Gew.-% des Gemischs aus der Komponente (A) und der Komponente (B) ausmacht.

**13.** Zusammensetzung nach einem der vorstehenden Ansprüche, wobei die Dichte der Zusammensetzung mindestens 940 kg/m$^3$ beträgt.

**14.** Zusammensetzung nach einem der vorstehenden Ansprüche, wobei die Komponente (C) 3 bis 15 Gew.-% der Zusammensetzung ausmacht.

**15.** Zusammensetzung nach einem der vorstehenden Ansprüche, wobei die Komponente (A) mit geringerem Molekulargewicht einen $MFR_2$-Wert von 10 bis 2000 g/10 min aufweist.

**16.** Zusammensetzung nach einem der vorstehenden Ansprüche, wobei der $MFR_2$-Wert der Zusammensetzung weniger als 0,1 g/10 min beträgt.

**17.** Zusammensetzung nach einem der vorstehenden Ansprüche, die der Gleichung entspricht:

$$Charpy(-20°C) > A \cdot (MFR_5)^B$$

wobei B = -0,26 und A = 5,5 sind.

**18.** Zusammensetzung nach einem der vorstehenden Ansprüche, bei der das Verhältnis:

$$SHI(5\ kPa\ /50\ kPa)/((\eta 300/200))^{0,5}$$

zwischen 4,7 und 9 liegt.

**19.** Zusammensetzung nach einem der vorstehenden Ansprüche, die der Gleichung entspricht:

$$FRR_{5/2} \geq 3,2 \cdot ((MFR_5)/40)^K$$

wobei K = -0,03 ist.

**20.** Zusammensetzung nach einem der vorstehenden Ansprüche, bei der das Verhältnis:

$$CTL/MFR_5^{-0,75} \cdot 10^{(-0,002 \cdot (Modul - 1500))}$$

mindestens 80 beträgt, wobei der Modul der Biegemodul ist.

**21.** Zusammensetzung nach einem der vorstehenden Ansprüche, wobei das Mw der Komponente (C) weniger als 150000 beträgt.

22. Zusammensetzung nach einem der vorstehenden Ansprüche, wobei der CTL-Wert der Zusammensetzung mindestens 500 Stunden beträgt.

23. Verwendung einer Zusammensetzung nach einem der vorstehenden Ansprüche bei der Rohrherstellung.

24. Rohre, die die Zusammensetzung nach einem der vorstehenden Ansprüche aufweisen.

25. Verfahren zur Herstellung einer Zusammensetzung nach einem der Ansprüche 1 bis 22, das folgendes umfaßt:

Polymerisieren von Ethylen oder von Ethylen und zumindest einem $\alpha$-Olefin-Comomomer in Gegenwart eines Ziegler-Natta-Katalysators, so daß bis zu 60 Gew.-% der Komponente (A) aus einem Polyethylenhomopolymer oder -copolymer mit geringerem Molekulargewicht (LMW) mit einer Dichte von mindestens 940 kg/m$^3$ erzeugt werden;

Polymerisieren von Ethylen oder von Ethylen und zumindest einem $\alpha$-Olefin-Comomomer in Gegenwart eines Ziegler-Natta-Katalysators, so daß bis zu 60 Gew.-% der Komponente (B) aus einem Polyethylencopolymer mit höherem Molekulargewicht (HMW) mit einer geringeren Dichte als die Komponente (A) erzeugt werden; und Polymerisieren von Ethylen oder von Ethylen und zumindest einem $\alpha$-Olefin-Comomomer in Gegenwart eines Katalysators mit einheitlichen aktiven Zentren, so daß bis zu 30 Gew.-% eines Polyethylenhomopolymer oder -copolymers mit einer Dichte von bis zu 980 kg/m$^3$ erzeugt werden;

und Vermengen der Komponente in irgendeiner Reihenfolge, so daß eine Zusammensetzung erzeugt wird, die eine Dichte von mindestens 925 kg/m$^3$ aufweist.

26. Verfahren zum Herstellen eines Rohrs, das folgendes aufweist:

(I) in einer ersten Stufe, vorzugsweise der Suspensionsphase, Polymerisieren von Ethylen in Gegenwart eines Ziegler-Natta-Katalysators, so daß bis zu 60 Gew.-% der Komponente (A) aus einem Polyethylenhomo- oder -copolymer mit geringerem Molekulargewicht (LMW) mit einer Dichte von mindestens 940 kg/m$^3$ erzeugt werden;

(II) in einer zweiten Stufe, vorzugsweise der Gasphase, Polymerisieren von Ethylen und zumindest einem $\alpha$-Olefin-Comomomer in Gegenwart des gleichen Ziegler-Natta-Katalysators, so daß bis zu 60 Gew.-% der Komponente (B) aus einem Polyethylencopolymer mit höherem Molekulargewicht (HMW) mit einer geringeren Dichte als die Komponente (A) erzeugt werden;

(III) Mischen des Produktes der Stufe (II) mit bis zu 30 Gew.-% des Polyethylenhomo- oder -copolymers, das durch Katalyse mit einheitlichen aktiven Zentren (SSC) erzeugt wurde und eine Dichte von bis 980 kg/m$^3$ aufweist;

wodurch eine Zusammensetzung mit einer Dichte von mindestens 925 kg/m$^3$ erzeugt wird;

(IV) Formen des Produktes von Schritt (III) zu einem Rohr.

## Revendications

1. Composition de polyéthylène comprenant au moins une première composition et une deuxième composition en des quantités de
au moins 70 % en poids de la première composition qui comprend au moins :

(A) jusqu'à 60 % en poids d'un homo- ou copolymère de polyéthylène de faible poids moléculaire (LMW) obtenu par une catalyse de Ziegler-Natta ayant une densité d'au moins 940 kg/m$^3$; et
(B) jusqu'à 60 % en poids d'un homo- ou copolymère de polyéthylène de poids moléculaire élevé (HMW) obtenu par une catalyse de Ziegler-Natta et ayant une densité inférieure à celle du composant (A) ; et
jusqu'à 30 % en poids de la deuxième composition qui comprend au moins :
(C) un homo- ou copolymère de polyéthylène obtenu par catalyse à site unique (SSC) et ayant une densité allant jusqu'à 980 kg/m$^3$,

dans laquelle ladite composition de polyéthylène a un MFR$_5$ inférieur à 5 g/10 minutes et une densité d'au moins 925 kg/m$^3$.

2. Composition de polyéthylène comprenant au moins une première composition et une deuxième composition en des quantités de
au moins 70 % en poids de la première composition qui comprend au moins :

(A) jusqu'à 60 % en poids d'un homo- ou copolymère de polyéthylène de faible poids moléculaire (LMW) obtenu par une catalyse de Ziegler-Natta ayant une densité d'au moins 940 kg/m$^3$ ; et

(B) jusqu'à 60 % en poids d'un homo- ou copolymère de polyéthylène de poids moléculaire élevé (HMW) obtenu par une catalyse de Ziegler-Natta et ayant une densité inférieure à celle du composant (A) ; et

jusqu'à 30 % en poids de la deuxième composition qui comprend au moins :

(C) un homo- ou copolymère de polyéthylène obtenu par catalyse à site unique (SSC) et ayant une densité allant jusqu'à 980 kg/m$^3$,

dans laquelle ladite composition de polyéthylène a un CTL d'au moins 300 heures et une densité d'au moins 925 kg/m$^3$.

3.  Composition de polyéthylène comprenant au moins une première composition et une deuxième composition en des quantités de

au moins 70 % en poids de la première composition qui a une densité de 925 à 975 kg/cm$^3$ et un MFR$_5$ de 0,1 à 5 g/10 minutes, et laquelle première composition comprend au moins :

(A) jusqu'à 60 % en poids d'un homo- ou copolymère de polyéthylène de faible poids moléculaire (LMW) obtenu par une catalyse de Ziegler-Natta ayant une densité d'au moins 940 kg/m$^3$ ; et

(B) jusqu'à 60 % en poids d'un homo- ou copolymère de polyéthylène de poids moléculaire élevé (HMW) obtenu par une catalyse de Ziegler-Natta et ayant une densité inférieure à celle du composant (A) ; et

jusqu'à 30 % en poids de la deuxième composition qui comprend au moins :

(C) un homo- ou copolymère de polyéthylène obtenu par catalyse à site unique (SSC) et ayant une densité allant jusqu'à 980 kg/m$^3$,

dans laquelle ladite composition de polyéthylène a une densité d'au moins 925 kg/m$^3$.

4.  Composition de polyéthylène selon la revendication 3, dans laquelle la première composition a un FFR$_{5/2}$ de 4,5 à 7,0.

5.  Composition selon l'une quelconque des revendications précédentes, dans laquelle la densité du composant (C) est inférieure à 960 kg/m$^3$.

6.  Composition selon l'une quelconque des revendications précédentes, dans laquelle le composant (C) est un copolymère d'un ou plusieurs des butène, hexène et octène.

7.  Composition selon l'une quelconque des revendications précédentes, dans laquelle le composant éthylénique de faible poids moléculaire (A) est un composant homopolymère et a une densité d'au moins 965 kg/m$^3$.

8.  Composition selon l'une quelconque des revendications précédentes, dans laquelle le composant éthylénique de faible poids moléculaire (A) est un homopolymère et a un rapport Mm/Mn de 3,5 à 20.

9.  Composition selon l'une quelconque des revendications précédentes, dans laquelle le composant éthylénique de poids moléculaire élevé (B) est un copolymère et a une densité inférieure à 960 kg/m$^3$.

10.  Composition selon l'une quelconque des revendications précédentes, dans laquelle le copolymère d'éthylène de poids moléculaire élevé (B) a un rapport Mm/Mn de 3,5 à 20.

11.  Composition selon l'une quelconque des revendications précédentes, dans laquelle le copolymère d'éthylène de poids moléculaire élevé (B) comprend l'hexène.

12.  Composition selon l'une quelconque des revendications précédentes, dans laquelle le (co)polymère d'éthylène de poids moléculaire élevé (B) forme de 35 à 45 % en poids du mélange du composant (A) et du composant (B).

13.  Composition selon l'une quelconque des revendications précédentes, dans laquelle la densité de ladite composition est d'au moins 940 kg/m$^3$.

14.  Composition selon l'une quelconque des revendications précédentes, dans laquelle le composant (C) forme de 3 à 15 % en poids de la composition.

**15.** Composition selon l'une quelconque des revendications précédentes, dans laquelle le composant de faible poids moléculaire (A) a un $MFR_2$ de 10 à 2000 g/10 minutes.

**16.** Composition selon l'une quelconque des revendications précédentes, dans laquelle le $MFR_2$ de la composition est inférieur à 0,1 g/10 minutes.

**17.** Composition selon l'une quelconque des revendications précédentes, qui satisfait l'équation

$$\text{Charpy } (-20\ ^\circ\text{C}) > A\ (MFR_5)^B$$

où B = -0,26 et A = 5,5.

**18.** Composition selon l'une quelconque des revendications précédentes, dans laquelle le rapport

$$SHI\ (5\ kPa/50\ kPa)/((Eta300/200))^{0,5}$$

est compris entre 4,7 et 9.

**19.** Composition selon l'une quelconque des revendications précédentes, qui satisfait l'équation

$$FRR_{5/2} \geq 3,2\ ((MFR_5)/40)^K$$

où K = -0,03.

**20.** Composition selon l'une quelconque des revendications précédentes, dans laquelle le rapport

$$CTL\ /\ MFR_5^{-0,75} \cdot 10^{(-0,02\ \cdot\ (\text{Module} - 1500))}$$

est d'au moins 80, le module étant le module d'élasticité en flexion.

**21.** Composition selon l'une quelconque des revendications précédentes, dans laquelle le Mm du composant (C) est inférieur à 150 000.

**22.** Composition selon l'une quelconque des revendications précédentes, dans laquelle le CTL de la composition est d'au moins 500 heures.

**23.** Utilisation d'une composition selon l'une quelconque des revendications précédentes dans la fabrication de tuyaux.

**24.** Tuyaux comprenant la composition selon l'une quelconque des revendications précédentes.

**25.** Procédé de préparation d'une composition selon l'une quelconque des revendications 1 à 22, comprenant :

la polymérisation d'éthylène ou d'éthylène et d'au moins un comonomère d'alpha-oléfine en présence d'un catalyseur de Ziegler-Natta de sorte à former jusqu'à 60 % en poids d'un homo- ou copolymère de polyéthylène de faible poids moléculaire (LMW) (A) ayant une densité d'au moins 940 kg/m³ ;
la polymérisation d'éthylène ou d'éthylène et d'au moins un comonomère d'alpha-oléfine en présence d'un catalyseur de Ziegler-Natta de sorte à former jusqu'à 60 % en poids d'un homo- ou copolymère de polyéthylène de poids moléculaire élevé (HMW) (B) ayant une densité inférieure à celle du composant (A) ; et
la polymérisation d'éthylène ou d'éthylène et d'au moins un comonomère d'alpha-oléfine en présence d'un catalyseur à site unique pour former jusqu'à 30 % en poids d'un homo- ou copolymère de polyéthylène ayant une densité allant jusqu'à 980 kg/m$^3$ ;
et le mélange desdits composants dans n'importe quel ordre pour former une composition qui a une densité d'au moins 925 kg/m$^3$.

26. Procédé de préparation d'un tuyau comprenant :

(I) dans une première étape, de préférence en phase en suspension, la polymérisation d'éthylène en présence d'un catalyseur de Ziegler-Natta de sorte à former jusqu'à 60 % en poids d'un homo- ou copolymère de polyéthylène de faible poids moléculaire (LMW) (A) ayant une densité d'au moins 940 kg/m$^3$ ;
(II) dans une seconde étape, de préférence en phase gazeuse, la polymérisation d'éthylène et d'au moins un comonomère d'alpha-oléfine en présence du même catalyseur de Ziegler-Natta de sorte à former jusqu'à 60 % en poids d'un copolymère de polyéthylène de poids moléculaire élevé (HMW) (B) ayant une densité inférieure à celle du composant (A) ;
(III) le mélange du produit de l'étape (II) avec jusqu'à 30 % en poids d'homo- ou copolymère de polyéthylène obtenu par catalyse à site unique (SSC) et ayant une densité allant jusqu'à 980 kg/m$^3$,
afin de former une composition ayant une densité d'au moins 925 kg/m$^3$ ; et
(IV) la transformation du produit de l'étape (III) en un tuyau.

FIG. 1

**Impact -20 C vs MFR5**

FIG 2

**Shear thinning index vs complex viscosity at 300 s-1**

FIG 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 129368 A
- WO 9856831 A
- WO 0034341 A
- EP 260130 A
- WO 9728170 A
- WO 9846616 A
- WO 9849208 A
- WO A A
- WO 9912981 A
- WO 9919335 A
- EP 423101 A
- EP 537130 A
- WO 9613529 A
- WO 03051934 A
- WO 9535323 A
- WO 0155230 A
- EP 810235 A
- WO 9951646 A
- WO 0310651 A
- EP 0810235 A
- EP 0887379 A
- EP 517868 A
- EP 1095102 A
- EP 1460105 A

### Non-patent literature cited in the description

- **K. B. McAuley.** Modelling, Estimation and Control of Product Properties in a Gas Phase Polyethylene Reactor. *Thesis, McMaster University,* August 1991
- **K. McAuley ; J. McMacGregor.** *AIChE Journal,* vol. 37 (6), 825-835
- Conference on Polymer Processing. Extended Abstracts and Final Programme. 19 August 1997, vol. 4, 13